# EUROPEAN PATENT SPECIFICATION

(11) **EP 3 069 398 B1**
(45) Date of publication and mention of the grant of the patent: **13.03.2019**
(21) Application number: 14861458.9
(22) Date of filing: 13.11.2014
(51) Int. Cl.: H01M 4/134, H01M 4/04, H01M 4/133, H01M 4/1393, H01M 4/1395, H01M 4/36, H01M 4/38, H01M 4/587, H01M 4/62

(54) **SILICON-GRAPHENE NANOCOMPOSITES FOR ELECTROCHEMICAL APPLICATIONS**
SILICIUM-GRAPHEN-NANOKOMPOSITE FÜR ELEKTROCHEMISCHE ANWENDUNGEN
NANOCOMPOSITES DE SILICIUM-GRAPHÈNE POUR DES APPLICATIONS ÉLECTROCHIMIQUES

(30) Priority: 13.11.2013 US 201314079057
(43) Date of publication of application: 21.09.2016
(73) Proprietor: XG Sciences Inc., Lansing Charter Township, MI 48911 (US)
(72) Inventor: DO, Inhwan, East Lansing, MI 48823 (US); WANG, Hong, Troy, MI 48084 (US); BAMBHANIA, Harshal Manubhai, East Lansing, MI 48823 (US); WANG, Liya, Ann Arbor, MI 48105 (US)
(74) Representative: HGF Limited
(86) International application number: PCT/US2014/065459
(87) International publication number: WO 2015/073674

(56) References cited:
- US-A1- 2006 035 149
- US-A1- 2010 283 005
- US-A1- 2011 073 834
- US-A1- 2012 019 342
- US-A1- 2012 064 409
- XILIN CHEN ET AL: "Conductive Rigid Skeleton Supported Silicon as High-Performance Li-Ion Battery Anodes", NANO LETTERS, vol. 12, no. 8, 16 July 2012 (2012-07-16), pages 4124-4130, XP055219119, US ISSN: 1530-6984, DOI: 10.1021/nl301657y
- ZHONGXUE CHEN ET AL: "In Situ Generation of Few-Layer Graphene Coatings on SnO2-SiC Core-Shell Nanoparticles for High-Performance Lithium-Ion Storage", ADVANCED ENERGY MATERIALS, vol. 2, no. 1, 16 November 2011 (2011-11-16), pages 95-102, XP055369206, DE ISSN: 1614-6832, DOI: 10.1002/aenm.201100464
- WANG C S ET AL: "LITHIUM INSERTION IN CARBON-SILICON COMPOSITE MATERIALS PRODUCED BY MECHANICAL MILLING", JOURNAL OF THE ELECTROCHEMICAL SOCIETY, ELECTROCHEMICAL SOCIETY, INC, US, vol. 145, no. 8, 1 August 1998 (1998-08-01), pages 2751-2758, XP008023329, ISSN: 0013-4651
- DATTA M K ET AL: "Silicon and carbon based composite anodes for lithium ion batteries", JOURNAL OF POWER SOURCES, ELSEVIER SA, CH, vol. 158, no. 1, 14 July 2006 (2006-07-14) , pages 557-563, XP027938983, ISSN: 0378-7753 [retrieved on 2006-07-14]
- YOON Y S ET AL: "Nano Si-coated graphite composite anode synthesized by semi-mass production ball milling for lithium secondary batteries", SURFACE AND COATINGS TECHNOLOGY, ELSEVIER BV, AMSTERDAM, NL, vol. 206, no. 2, 25 July 2011 (2011-07-25) , pages 553-558, XP028283884, ISSN: 0257-8972, DOI: 10.1016/J.SURFCOAT.2011.07.076 [retrieved on 2011-08-03]
- DONG H ET AL: "Structural and electrochemical characterization of Fe-Si/C composite anodes for Li-ion batteries synthesized by mechanical alloying", ELECTROCHIMICA ACTA, ELSEVIER SCIENCE PUBLISHERS, BARKING, GB, vol. 49, no. 28, 17 August 2004 (2004-08-17), pages 5217-5222, XP004606604, ISSN: 0013-4686, DOI: 10.1016/J.ELECTACTA.2004.07.003

## Description

### BACKGROUND OF THE INVENTION

This invention relates to graphene nanoplatelet composites with electroactive materials, and electroactive materials coated with graphene nanoplatelets. The graphene nanocomposites are useful as battery materials.

Lithium-ion batteries are being pursued for a variety of applications including electric or hybrid electric vehicles (EV & HEV), consumer electronics, grid energy storage systems and distributed power generation units. The success of LIB in such markets strongly depends on the cost, energy density, power capability, cycle life, and safety of the battery cells, which are largely dominated by the electrode materials used. While LIB technologies have advanced significantly since their first commercialization in the early 90's, they are not keeping pace with the ever increasing demand for batteries with higher energy storage capacities. For example, DOE EV Everywhere program defines an EV cell target of 400 Wh/kg with 1000 cycles, at cost of ownership comparable to conventional ICE vehicles. This target cannot be met with current LIB chemistries, especially with graphite as the anode. Because of graphite's low capacity, a cell with a carbon-based anode can reach at most 200-250 Wh/kg, depending on the type of cathode. Therefore, there is a great need to develop advanced anodes for future generation LIB.

Silicon (Si) is considered as the most promising anode material due to its high capacity and proper working voltage. Theoretically, Si can provide up to 4200 mAh/g of Lithium (Li) storage capacity. It can be lithiated in the potential range of 0.0 ∼ 0.4 V, which provides the capability to make a high energy density device when paired with an appropriate cathode. Nevertheless, replacing traditional graphite anode materials with Si has proven to be very challenging. Two major barriers have hindered the development of Si-based anodes for commercial applications, especially for use in EV batteries:
- Poor cycle life. Si tends to pulverize during cycling as a result of substantial volume change (up to 400%) during charging/discharging of the batteries, which in turn leads to the loss of electrical contact or even disintegration of both Si particles and the electrode coating.
- High synthesis cost. Most of the processes used for the synthesis of Si-based anodes utilize expensive chemical precursors, exotic synthesis methods, or capital-intensive processes. Furthermore, they are usually not suitable for high-volume production. As a result, none of these processes has been successfully commercialized.

In order to solve the cycling stability problems, researchers have taken various approaches including (a) using nano particles, nanotubes, nano-spheres, and nanowires, (b) applying carbon coating by various methods, or (c) designing porous Si structures. While the capacity, rate capability, and cycling stability have been improved to a certain extent with these processes, the materials usually have relatively low first cycle reversibility and in general still cannot meet the life requirements for most commercial applications.

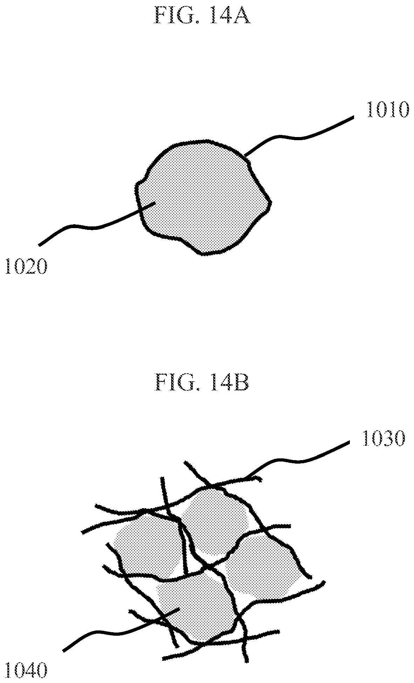

Silicon particles coated by carbon layers via chemical vapor deposition and carbonization process using carbon precursors such a pitch, glucose, sugar, polyacrylonitrile, polyvinyl alcohol etc. In such coating processes, a carbon thin film **1010** on Si **1020** surface forms a continuous phase, as illustrated in FIG. 14A, which results in retarding electrolyte penetration and thus 1st cycle efficiency is generally low.

Other approaches involved the coating of silicon particles **1040** with graphene materials **1030** such as graphenes reduced from graphite oxide, exfoliated graphene, as illustrated in FIG 14B. In this case, the graphene size is larger than the Si size and one graphene particle makes contact with more than one Si particles. This results in a somewhat rigid framework that cannot easily accommodate the significant volume change during lithium cycling.

And, the high cost may still be a major obstacle preventing the use of Si as a commercial anode even if the performance is improved. Therefore, a high-performance and low-cost Si-based anode remains a lofty goal of the battery industry.
XILIN CHEN ET AL: "Conductive Rigid Skeleton Supported Silicon as High-Performance Li-Ion Battery Anodes", NANO LETTERS, vol. 12, no. 8, 16 July 2012 (2012-07-16), pages 4124-4130, XP055219119, US, ISSN: 1530-6984, DOI: 10.1021/n1301657y relates to a cost-effective and scalable method to prepare a core-shell structured Si/B4C composite with graphite coating with high efficiency, exceptional rate performance, and long-term stability ZHONGXUE CHEN ET AL: "In Situ Generation of Few-Layer Graphene Coatings on Sn02-SiC Core-Shell Nanoparticles for High-Performance Lithium-Ion Storage", ADVANCED ENERGY MATERIALS, vol. 2, no. 1, 16 November 2011 (2011-11-16), pages 95-102, XP055369206, DE ISSN: 1614-6832, DOI: 10.1002/aenm.201100464 relates to a simple ball-milling method to synthesize a tin oxide-silicon carbide/few-layer graphene core-shell structure in which nanometer-sized SnO2 particles are uniformly dispersed on a supporting SiC core and encapsulated with few-layer graphene coatings by in situ mechanical peeling. WANG CS ET AL: "Lithium insertion in carbon-silicon composite materials produced by mechanical milling", JOURNAL OF THE ELECTROCHEMICAL SOCIETY, ELECTROCHEMICAL SOCIETY, INC, US vol. 145, no. 8, 1 August 1998 (1998-08-01), pages 2751-2758, XP008023329, ISSN: 0013-4651 relates to the preparation of carbons containing nanosize silicon particles by mechanical milling of graphite and silicon mixtures with different atomic ratios.
DATTA M KET AL: "Silicon and carbon based composite anodes for lithium ion batteries", JOURNAL OF POWER SOURCES, ELSEVIER SA, CH, vol.158, no.1, 14July2006 (2006-07-14), pages557-563, XP027938983, ISSN: 0378-7753 relates to the synthesis of composites comprising silicon (Si), graphite (C) and polyacrylonitrile-based disordered carbon (PAN-C), denoted as Si/C/PAN-C, by thermal treatment of mechanically milled silicon, graphite, and polyacrylonitrile (PAN) powder of nominal composition C-17.5 wt.% Si-30 wt.% PAN.
YOON Y SET AL: "Nano Si-coated graphite composite anode synthesized by semi-mass production ball milling for lithium secondary batteries", SURFACE AND COATINGS TECHNOLOGY, ELSEVIER BV, AMSTERDAM, NL, vol. 206, no. 2, 25 July 2011 (2011-07-25), pages 553-558, XP028283884, ISSN: 0257-8972, DOI: 10.1016/J.SURFCOAT.2011.07.076 relates to the preparation of Si-based anodes for Li ion batteries by the uniform coating of nano-sized silicon particles onto a natural graphite surface by a 1 ton/month-based semi-mass production ball milling method

### SUMMARY

Aspects and features of the invention are as defined in the appended claims.

In one embodiment, a nanographitic composite for use as an anode in a lithium ion battery includes particles of an electroactive material; and a coating layer comprising a plurality of graphene nanoplatelets having a thickness of 0.34 nm to 50 nm and a lateral dimension of less than 900 nm, wherein the electroactive particles have a lateral dimension that is larger than the lateral dimension of the graphene nanoplatelets, and the graphene nanoplatelets coat at least a portion of the nanoscale particles to form a layer made up of overlapping graphene nanoplatelets.

In one or more embodiments, the graphene nanoplatelets-coated nanoscale particles form agglomerates.

In some embodiments, the lateral dimension of the graphene nanoplatelets is less than 50% of the lateral dimension of the electroactive particle, or the lateral dimension of the graphene nanoplatelets is less than 25% of the lateral dimension of the electroactive particle, or the lateral dimension of the graphene nanoplatelets is less than 10% of the lateral dimension of the electroactive particle.

In some embodiments, more than 50% of the surface area of the electroactive particle is coated by the nanographene coating layer, or more than 70% of the surface area of the electroactive particle is coated by the nanographene coating layer, or more than 80% of the surface area of the electroactive particle is coated by the nanographene coating layer, or more than 90% of the surface area of the electroactive particle is coated by the nanographene coating layer, or more than 95% of the surface area of the electroactive particle is coated by the nanographene coating layer.

In some embodiments, more than 50% of the electroactive particles have a lateral dimension that is larger than the lateral dimension of the nanographene platelets coating the particles, or more than 60% of the electroactive particles have a lateral dimension that is larger than the lateral dimension of the nanographene platelets coating the particles, or
no more than 70% of the electroactive particles have a lateral dimension that is larger than the lateral dimension of the nanographene platelets coating the particles, more than 80% of the electroactive particles have a lateral dimension that is larger than the lateral dimension of the nanographene platelets coating the particles, or more than 90% of the electroactive particles have a lateral dimension that is larger than the lateral dimension of the nanographene platelets coating the particles, or more than 95% of the electroactive particles have a lateral dimension that is larger than the lateral dimension of the nanographene platelets coating the particles.

In some embodiments, the graphene nanoplatelets have a lateral dimension of less than 500 nm, or the graphene nanoplatelets have a lateral dimension of 30 nm to 200 nm.

In some embodiments, the layer include multiple layers of graphene nanoplatelets.

In some embodiments, the electroactive material one or more material selected from the group consisting of silicon, tin, iron, magnesium, aluminum, lead, gold, silver, titanium, platinum, palladium, ruthenium, copper, nickel, rhodium and nickel and combinations thereof.

In some embodiments, electroactive material includes silicon.

In some embodiments, the silicon is present in a range from 5 wt% to 90 wt% of the composite, or the silicon is present in a range from 40wt% to 70 wt% of the composite.

In some embodiments, the composite further includes a conductive carbon additive.

In some embodiments, the conductive carbon additive is selected from the group consisting of carbon black, acetylene black, carbon nanotube, carbon fiber, carbon nanohorn, carbon nanocoil and combinations thereof.

In some embodiments, the composite has a tap density of greater than 0.50 g/cm³, or the composite has a tap density of greater than 0.8 g/cm³.

In some embodiments, the electroactive particle is present in a range from 5 wt% to 90 wt% of the composite.

In some embodiments, the surface area is in the range of 50 to 200 m²/g.

In another embodiment, an electrode for use as an anode in a lithium ion battery includes (a) the nanographitic composite according to any preceding embodiment; and (b) a binder.

In some embodiments, the electrode further includes a conductive additive.

In some embodiments, the conductive additive comprises a graphene.

In some embodiments, the conductive additive is 2 to 20 wt% of the total electrode weight.

In some embodiments, the binder is 3 to 20 wt% of the total electrode weight.

In another embodiment, a lithium ion battery is provided having an anode according to any preceding claim. a cathode, a separator spacing apart the anode and the cathode; and an electrolyte in contact with the anode and the cathode.

In another embodiment a method of making a nanocomposite suitable for use in a lithium ion battery includes introducing an electroactive particle powder into a high energy dry mill, wherein the particles are of a micron-scale dimension; introducing a graphite particle powder into the high energy dry mill, wherein the particles are of a micron-scale dimension; and milling the electroactive particle powder and the graphite particle powder, to exfoliate the graphite and reduce the particle size of the electroactive particle to less than 3um and reduce the particle size of the graphite particle to less than 900 nm; wherein the exfoliated size-reduced graphite coats the surface of the sized-reduced electroactive particle, and wherein the resultant nanocomposite has a bulk density of greater than 0.50 g/cm³.

In this method embodiment the silicon is in the range of 40wt% to 70wt% of the particles.

An electrode material comprising nanographene platelets and an electroactive material wherein the nanographene platelets are covalently bonded to the electro active material by pi bonds or partial pi bonds.

In another embodiment a nanocomposite is provided that is prepared by the reaction of nanographitic platelets having a thickness of 0.34 nm to 50 nm and lateral dimensions of less than 900 nm, with electroactive particles, wherein the electroactive particle has an lateral dimension that is larger than a lateral dimension of the nanographitic platelets.

In another embodiment, a nanographitic composite for use as an anode in a lithium ion battery includes a plurality of composite particles having an electroactive particle; and a coating layer comprising an inner layer of graphene nanoplatelets that are tightly bound to the electroactive particle and an outer layer of graphene nanoplatelets that interact loosely with the inner layer of graphene nanoplatelets, wherein the nanographitic platelets covers at least a portion of the nanoscale particle to form a nanographitic layer.

In some embodiments, the inner layer includes a mixture of carbon and silicon.

In some embodiments, the inner layer has a thickness in the range of 5-25 nm.

In some embodiments, the inner layer is integral with the electroactive particle.

In some embodiments, the inner layer is crystalline, or the inner layer is disordered or amorphous.

In some embodiments, the electroactive particle includes silicon and the inner layer comprises an SiC intermetallic.

In some embodiments, the inner layer is covalently bonded to the electroactive particle.

In some embodiments, the covalent bond is a pi-bond or a partial pi-bond.

In some embodiments, the silicon and carbon content of the inner layer varies across its thickness.

In some embodiments, the graphene nanoplatelets-coated nanoscale particles form agglomerates.

In some embodiments, the graphene nanoplatelets have a thickness of 0.34 nm to 50 nm and lateral dimensions of less than 900 nm.

In some embodiments, the coating layer includes multiple layers of graphene nanoplatelets.

In some embodiments, the electroactive particle include one or more material selected from the group consisting of silicon, tin, iron, magnesium, aluminum, lead, gold, silver, titanium, platinum, palladium, ruthenium, copper, nickel, rhodium and nickel and combinations thereof.

In some embodiments, electroactive particle comprises silicon.

In some embodiments, the silicon is present in a range from 10 wt% to 90 wt% of the composite.

In some embodiments, the composite further includes a conductive carbon additive.

In some embodiments, the conductive carbon additive is selected from the group consisting of carbon black, acetylene black, carbon nanotube, carbon fiber, carbon nanohorn, carbon nanocoil and combinations thereof.

In some embodiments, the composite has a tap density of greater than 0.50 g/cm³, or the composite has a tap density of greater than 0.8 g/cm³.

In some embodiments, the silicon is present in a range from 10 wt% to 90 wt% of the composite.

In another embodiment, an electrode for use as an anode in a lithium ion battery includes (a) the nanographitic composite according to any preceding embodiment; and (b) a binder.

In some embodiments, the electrode further includes a conductive additive.

In some embodiments, the conductive additive comprises a graphene.

In some embodiments, the conductive additive is 2 to 20 wt% of the total electrode weight.

In some embodiments, the binder is 3 to 20 wt% of the total electrode weight.

2-dimensional and flexible graphene nanoplatelets are introduced into the Si anode structure to accommodate the volume change of Si particles and maintain the integrity of the electrode during cycling. The face contact between graphene nanoplatelets and Si particles is more effective in maintaining an electric pathway than the zero dimensional carbon particle or one-dimensional carbon nanotube additives. Graphene nanoplatelets of suitable size relative to the electroactive particles are selected to optimize performance in a lithium ion battery.

### BRIEF DESCRIPTION OF THE DRAWING

The invention is described with reference to the following figures, which are presented for the purpose of illustration only and are not intended to be limiting.

In the Drawings:
FIGs. 1A and 1B are schematic illustrations of a nanographitic composite according to one or more embodiments.
FIG. 1C is schematic illustration of the expansion of a nanographitic composite during electrochemical cycling according to one or more embodiments.
FIG. 2 is a transmission electron microscopy (TEM) image of a silicon particle coated with a large number of graphene nanoplatelets according to one or more embodiments (scale bar is 100 nm).
FIG. 3 is a high resolution TEM image of the interface between a silicon particle and a graphene nanoplatelet layer (scale bar is 1 nm) according to one or more embodiments.
FIG. 4 is a high resolution TEM image of the interface between a silicon particle 400 and a graphene nanoplatelet layer (scale bar is 1 nm) according to one or more embodiments.
FIGs. 5A-5C investigate the composition of the interface region between the silicon particle and the graphene nanoplatelet coating according to one or more embodiments.
FIGs. 6A-6C investigate the composition of the interface region between the silicon particle and the graphene nanoplatelet coating according to one or more embodiments.
FIG. 7 is a TEM photomicrograph of graphitic nanocomposite according to one or more embodiments (scale bar is 100 nm).
FIG. 8 is a transmission electron microscopy (TEM) image of a cluster of silicon particles coated with a large number of graphene nanoplatelets according to one or more embodiments (scale bar is 500 nm).
FIG. 9 is a high resolution transmission electron microscopy (TEM) photograph of a nanocomposite according to one or more embodiments that shows the graphitic nanoplatelet coating the silicon particle surface according to one or more embodiments(scale bar is 1 nm).
FIG. 10 is a schematic illustration of a process for preparing a nanographitic composite according to one or more embodiments.

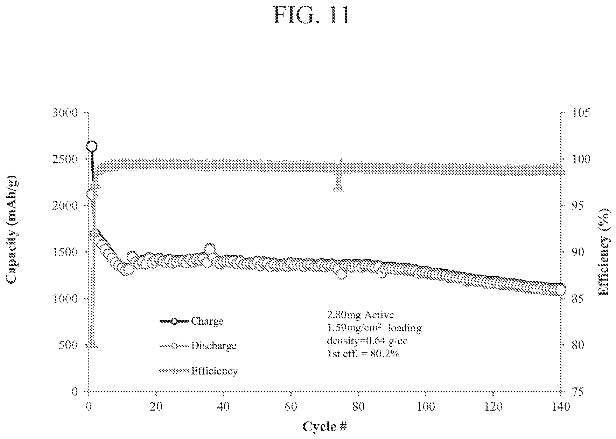

FIG. 11 is a schematic illustration of an anode incorporating the nanographitic composite according to one or more embodiments.

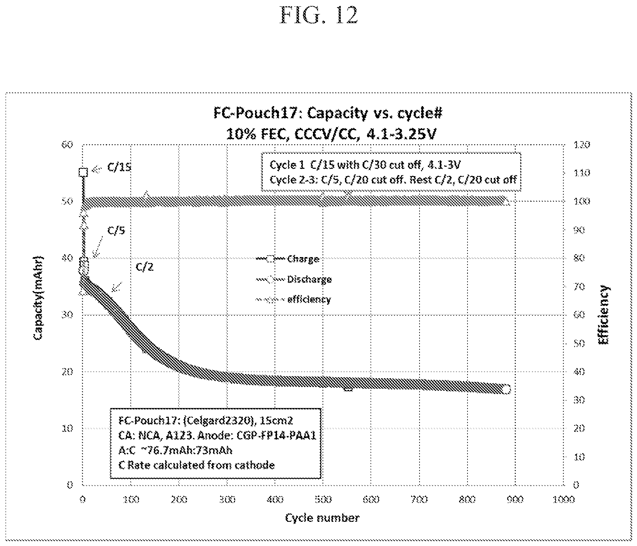

FIG. 12 is a plot of capacity vs. cycle number, demonstrating the capacity and cycle performance of Si/graphene anode; tested in coin cell vs. Li counter electrode with 1M LiPF₆ / EC: DMC (1:1) electrolyte with 10% FEC as additive.

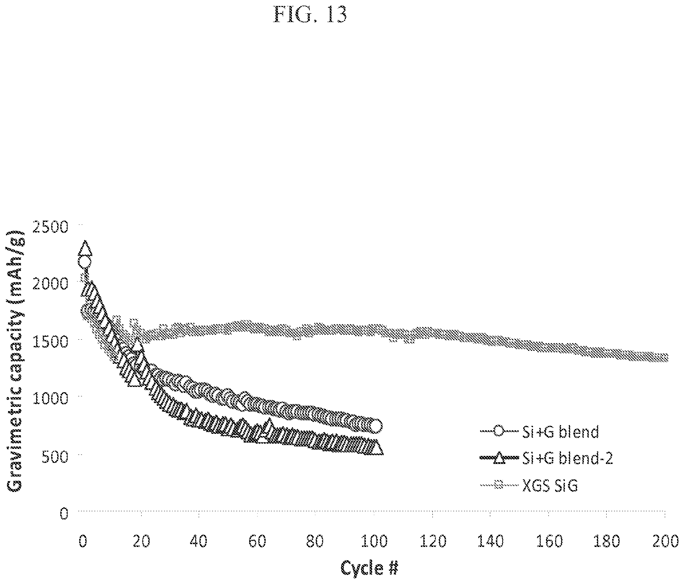

FIG. 13 is a plot of capacity vs. cycle number, demonstrating the cycle performance of a full cell consisting of NCA cathode, SiCG-B/graphite anode, and 1M LiPF₆ in EC/DMC+10% FEC electrolyte.
FIG. 14A and FIG. 14B are illustrations of prior art approaches to combining silicon with carbon.

### DETAILED DESCRIPTION

A nanographitic composite for use as a battery material in a lithium ion battery is described. The composite material includes nanoscale and microscale particles of an electroactive material, such as silicon, that are directly coated with nanographitic platelets or graphene nanoplatelets. By directly coated it is meant that the graphene forms a direct contact with the electroactive particle. The contact is sufficiently direct to allow the formation of a strong, robust interaction between the graphene nanoplatelets and the electroactive materials. Similarly, there is no intermediary material disposed between the graphene and the electroactive particle.

The graphene nanoplatelets are of a relatively small dimension, that is, the graphene nanoplatelets are nanoscale and are not of the lengths typically associated with graphitic platelets or flakes (which are greater than 1 µm and typically greater than 10 µm). The electroactive particle has an average particle size that is larger than or of a comparable size to the average lateral dimension of the graphene nanoplatelets. The size requirements are an unexpected result as the art teaches further reduction in particle size of the electro active material is desirable and we have discovered the relatively larger electro active material with smaller nanographic platelets has improved capacity and cycle life. In one or more embodiments, a longest lateral dimension of the graphene nanoplatelets is less than a longest lateral dimension of the electroactive particle. In one or more embodiments, a longest lateral dimension of the graphene nanoplatelets is less than 50% of a longest lateral dimension of the electroactive particle. In one or more embodiments, a longest lateral dimension of the graphene nanoplatelets is less than 25% of a longest lateral dimension of the electroactive particle. In one or more embodiments, a longest lateral dimension of the graphene nanoplatelets is less than 10% of a longest lateral dimension of the electroactive particle.

The electroactive particle is substantially completely coated by the nanographene coating. By substantially completely coated, it is meant that at more than 50%, or at least 70%, or at least 80% to at least 90% or at least 95% of the surface area of the electroactive particle is coated with the graphene nanoplatelet layer. The remaining area may be uncoated or it may interact with graphene sheets or flakes of larger (longer) dimensions. The smaller graphene nanoplatelets are able to surround and attach to the electroactive particle to form a nanographitic layer made up of overlapping graphene nanoplatelets. Two-dimensional and flexible graphene nanoplatelets wrap around electroactive particles, accommodate the dimensional change of electroactive particles during electrochemical cycling, and help maintain electric contact between particles and/or other components in the electrode coating.

In one or more embodiments, the nanographene platelets form a strong association with the surface of the electroactive particle. The graphene nanoplatelets can be physically attached or chemically bonded to the surface of the electrochemical particle. In certain embodiments, the nanocomposite includes covalent bonding of the graphene carbon to the surface of the electroactive material through pi-bonds or partial pi-bonds. In other embodiments, the carbon from the graphene can diffuse into the electroactive particle to form a layer of mixed carbon and electroactive material. The region can be amorphous, disordered, crystalline, or can include a compound formed between the electroactive material and carbon.

In one or more embodiments, the graphene nanoplatelets can stack or overlap in the coating and can form multi-layer discontinuous or continuous coatings. In one or more embodiments, the graphene nanoplatelets are arranged around the electroactive particle to form an inner graphene layer that is tightly bound to the electroactive core, for example, by covalent bonding and/or formation of interdiffusion regions that contain both carbon and electroactive material, and a loosely associated graphene layer assembled, for example, by van der Waals attraction between graphene nanoplatelets. The graphene nanoplatelet layers can be made up of stretched or tangled graphene layers.

Because the graphene nanoplatelets are relatively short and assemble by stacking on one another, the layer is permeable to electrolyte. The coating provides electrolyte access to the electroactive particle in the core, while robustly adhering to the electroactive particle. Advantageously, the graphene nanoplatelet layer is capable of accommodating the expansion and contraction of the electroactive particle during electrochemical cycling without loss of electrical conductively or mechanical degradation of the composite.

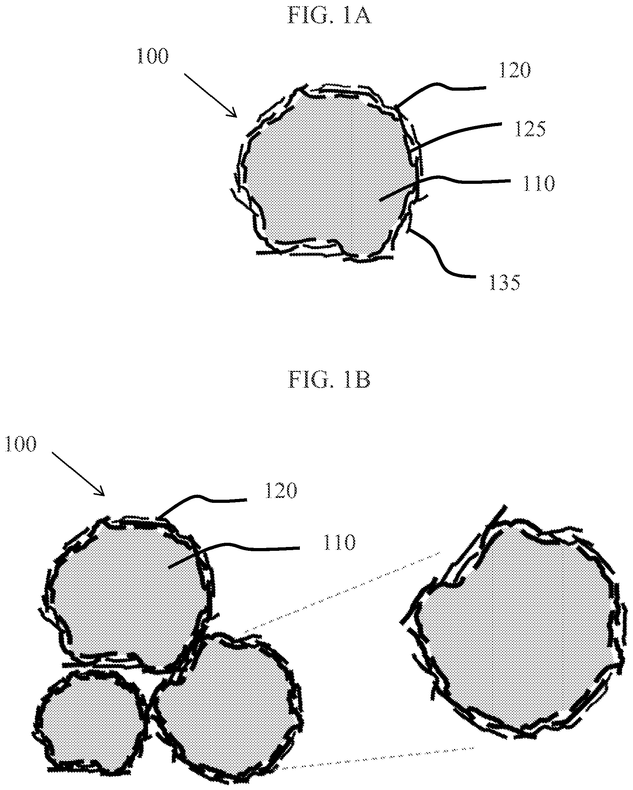

FIG. 1A is a schematic illustration of a nanographitic composite in which the electroactive particle is silicon, e.g., a silicon-nanographitic or nSiG composite, according to one or more embodiments. The nSiG composite **100** is in form of Si particle **110** covered by multilayers of many graphene nanoplatelets **120.** As can be seen, the Si particle is much larger than the lateral dimensions of the graphene nanoplatelets. In one or more embodiments, a longest lateral dimension of the graphene nanoplatelets is less than a longest lateral dimension of the silicon particle. In one or more embodiments, a longest lateral dimension of the graphene nanoplatelets is less than 50% of a longest lateral dimension of the silicon particle. In one or more embodiments, a longest lateral dimension of the graphene nanoplatelets is less than 25% of a longest lateral dimension of the silicon particle. In one or more embodiments, a longest lateral dimension of the graphene nanoplatelets is less than 10% of a longest lateral dimension of the silicon particle. A portion of the graphene nanoplatelets, e.g., nanoplatelet **125,** forms a strong interaction with the surface of the silicon particle **110.** As noted above, this interaction can be, among others, a covalent interaction between the carbon and silicon or it can be interdiffusion or mixing of the silicon and carbon. Other moieties, such as oxygen, may also be involved in the formation of the strong interaction between the two components. A portion of the graphene nanoplatelets, e.g., nanoplatelet **135,** forms a looser association or interaction with the surface of the silicon particle **110.** Such association can be due, among other reasons, to van der Waals attractive forces between the graphene nanoplatelets.

In one or more embodiments, the silicon is present in a range from 5 wt% to 90 wt% of the composite. In one or more embodiments, the silicon is present in a range from 5 wt% to 20 wt% of the composite. In one or more embodiments, the silicon is present in a range from 5 wt% to 40 wt% of the composite. In one or more embodiments, the silicon is present in a range from 20 wt% to 70 wt% of the composite. In one or more embodiments, the silicon is present in a range from 40 wt% to 70 wt% of the composite. The relative proportions of the Si and graphene can be selected to provide a target energy density or to provide a desired electronic conductivity in the nanocomposite. In embodiments in which the graphene proportion is large, there may be excess graphene that is not directly associated with the electroactive particle in the manner described hereinabove. In this case, the graphene-coated electroactive particles may be embedded in a matrix of graphene. The matrix graphene may be larger in size than the nanographene platelets that coat the electroactive particles. Similarly, in embodiments in which the graphene proportion is low, the coating on the electroactive particles may not completely cover the underlying electroactive particle surface. Nonetheless, it is expected that the graphene nanoplatelet layer covers at least a portion of the electroactive particle surface area.

FIG. 1B is a schematic illustration showing a cluster or agglomeration of coated electroactive particles (in which common elements are similarly labeled). Agglomerates can range in size depending on the size of the silicon particles. In one or more embodiments, the agglomerate size is greater than 2 µm; in other embodiments, the agglomerate size is about 2 µm.

In certain embodiments, the electroactive particle (shown here as Si as an example) can range in particle size from 10 nm to 3 µm. Typically, the electroactive particle is about 500 nm to about 3 µm, or about 1-2 µm, with a tail into the smaller particle size. As is discussed below in relation with the methods used to make the nanocomposite, the range of particle size can be quite large. Due, in part, to the large particle size distribution after dry milling as described herein below, a portion of the electroactive particle sizes may be smaller than the graphene nanoplatelets and a portion of the electroactive particles may be larger than the graphene nanoplatelets; however, the predominant number of electroactive particles in the nanocomposite will have the longest lateral dimension of the graphene nanoplatelets less than the longest lateral dimension of the electroactive particle. By predominant as used herein, it is meant that more than 50%, or more than 60% or more than 70% or more than 80% or more than 90%, or more than 95% of the electroactive particles have a longest lateral dimension that is large than the nanographene platelets coating the particles.

The electroactive particle is made using an electrochemically active material (other than carbon) that is capable of taking up or intercalating lithium ions. The electrochemically active material can be metals or metalloids such as silicon (Si), germanium (Ge), tin (Sn), lead (Pb), antimony (Sb), bismuth (Bi), zinc (Zn), aluminum (Al), and cadmium (Cd). The electrochemically active material can be alloys or intermetallic compounds of Si, Ge, Sn, Pb, Sb, Bi, Zn, Al, or Cd, stoichiometric or non-stoichiometric with other elements. The electrochemically active material can be oxides, carbides, nitrides, sulfides, phosphides, selenides, tellurides, antimonides, or their mixtures (e.g., co-oxides or composite oxides) of Si, Ge, Sn, Pb, Sb, Bi, Zn, Al, Fe, or Cd. In one or more embodiments, the electroactive material is one or more metal selected from the group consisting of silicon, tin, iron, magnesium, aluminum, lead, gold, silver, titanium, platinum, palladium, ruthenium, copper, nickel, rhodium and nickel and combinations thereof.

The size of the graphene nanoplatelets can be less than 900 nm. In certain embodiments, the graphene nanoplatelets can be less than 500 nm. In certain embodiments, the nanosized graphene nanoplatelets are in a range of 10 nm to 900 nm or in a range of 10 nm to 700 nm. In other embodiments, the nanosized graphene platelets are in a range of 30 nm - 200nm. In some embodiments, the nanosized graphene platelets have a thickness of 0.34 nm to 50 nm or a thickness of 0.34 nm to 5 nm or a thickness of less than 2 nm. Hence, for example, one single Si particle with 1µm diameter may be covered by 10 ∼ 1000 nanosized graphite particles. The graphene nanoplatelets can have a relatively narrow aspect ratio, e.g., greater than graphite. Aspect ratios above 5 and below 500 are preferred and more preferred are aspect ratios above 10 and below 100. Aspect ratio as used herein refers to (length, width)/width. For an exemplary SiG nanocomposite, the surface area of graphene is above 300 m²/g. In certain embodiments, the overall surface area of the graphite nanocomposite is greater than 50 m²/g, or greater than 100 m²/g, or between 50 m²/g and 200 m²/g. In certain embodiments, the overall surface area of the nSiG nanocomposite is greater than 50 m²/g, or greater than 100 m²/g, or between 50 m²/g and 200 m²/g.

Graphene has superior electrical and thermal conductivities, excellent mechanical strength, and good flexibility with a thin 2-dimensional morphology. As a bulk material, graphene nanoplatelets, which are a stacking of a few layers of graphene possess many of these desirable properties. In one or more embodiments, graphene nanoplatelets are built into the composite structure to mitigate the expansion and contraction of Si particles. Due to the compact assembly of the graphene nanoplatelets around the core particle, the bulk density of the materials is high as compared to prior art composites made using larger graphene sheets or flakes. In one or more embodiments, the tap density of the nanocomposite is greater than 0.8 g/cm³. Tap density can be measured using techniques that are well-known to those of skill in the art. Exemplary methods for measuring tap density include ASTM D7481-09.

Without being bound by any particular mode of operation, it is hypothesized that the graphene nanoplatelets form strong interactions with the electroactive particle, e.g., silicon, for example, by covalent bonding between the two. In one or more embodiments, the nanographitic platelets are covalently bonded to the electro active material by pi bonds (or partial pi bonds). In one or more embodiments, the graphene forms a diffusion layer with the electroactive particle to create an interlayer region containing both carbon and the electroactive material. The graphene nanoplatelets interact with one another through weaker interactions, such as van der Waals interactions. Thus, the nanocomposites contain an inner carbon-containing layer that strongly interacts with the electroactive particle and an outer layer of graphene that is loosely associated with the underlying graphene layer. As expansion occurs, the graphene layers slide easily over one another, while the inner layer remains firmly interactive with the silicon particle. Given that the graphene layers can glide easily due to weak Van der Waals force, a strong bond on one side and easy glide on the other side can make this material more adaptive to Si volume change. In addition, the surface graphene layers are stacked non-linearly, in an undulating or crimped fashion, that can stretch or extend to accommodate the electroactive particle as it expands. This helps keep the integrity of the composite.

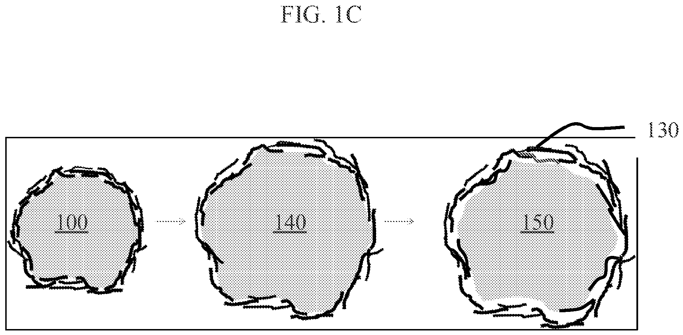

The Si/graphene composite can be integrated into the anode of a lithium ion battery to mitigate the severe expansion and contraction of Si particles during electrochemical cycling. The graphene nanoplatelets provide a large contact area with Si particles and their flexibility helps accommodate the volume change of Si particles during the charging and discharging of the battery. FIG. 1C is a schematic illustration showing the advantageous properties of the nanographitic composite during an expansion event, such as during electrochemical cycling. The nanocomposite **100** includes a coated particle as prepared according to compositing methods, for example, as are described herein below. During lithiation, lithium ions are taken up by the silicon particle, causing it to expand **140.** The multilayer of graphene anoplatelets is held in place, at least in part, via the strong interaction of the first graphene nanoplatelets with the surface of the silicon particles and the van der Waals interaction of the multiple layers of graphene nanoplatelets. When the Si phase is expanded by the lithiation process, the graphene coating can be thinned, but the graphene nanoplatelets still keep their connection due to the multilayer structure of the graphene nanoplatelet coating. When Si is contracted in delithiation process, the interaction between the Si surface and graphitic coating layer is robust and can accommodate the size reduction, as shown for nanocomposite **150.** The overlapping formation and interparticle attraction provides a support so that the interconnection of graphitic particles **130** does not collapse or break up and the electronic connectivity is sustained. Due to the relatively good connectivity of the coating with the silicon particle and its robustness on expansion and contraction, coulombic efficiency of nSiG nanocomposite remains over 99% after the 2^{nd} cycle, which is rare for any Si composited coated by carbon and/or graphene.

In another aspect, the graphitic nanocomposite can include other additives selected to impart additional desirable features to the nanocomposite. Suitable additives include metallic additives, and conductive additives, such as carbon blacks, carbon nanotubes and other graphene additives to improve the electronic connectivity within the composite.

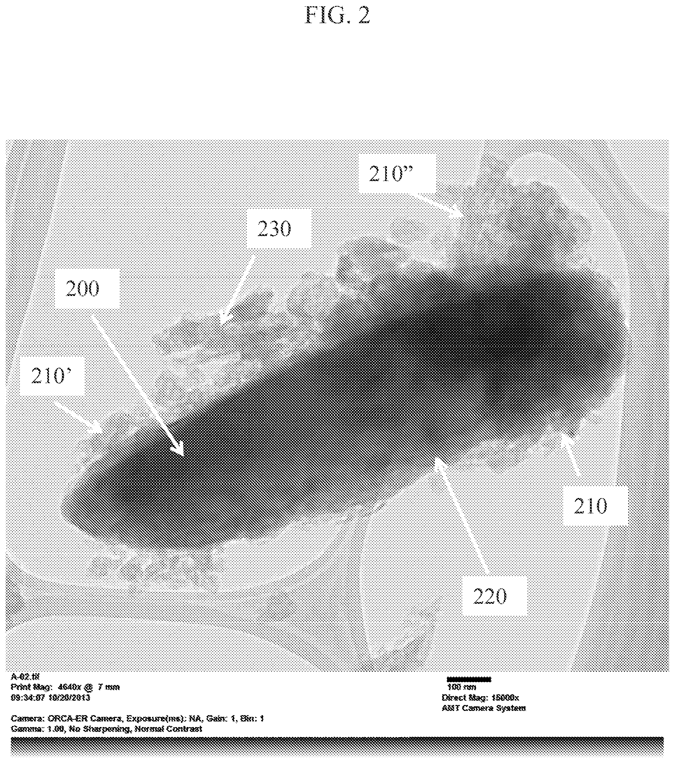

FIG. 2 is a TEM image of a silicon particle **200** coated with a large number of graphene nanoplatelets **210** (scale bar is 100 nm) according to one or more embodiments. The TEM images make it readily possible to establish the size of graphene platelets involved in multilayer coating of Si. It is apparent from this image that the silicon particle is many times larger than the nanoplatelets. Nanographene particles range from about 1/10^{th} the size of the silicon particle (**210')** to about ¼ the size of the silicon particle (**210").** In addition, the nanocomposite contains an inner layer **220** that is in close direct contact with the silicon particle and an outer layer **230** of more loosely associated graphene nanoparticles.

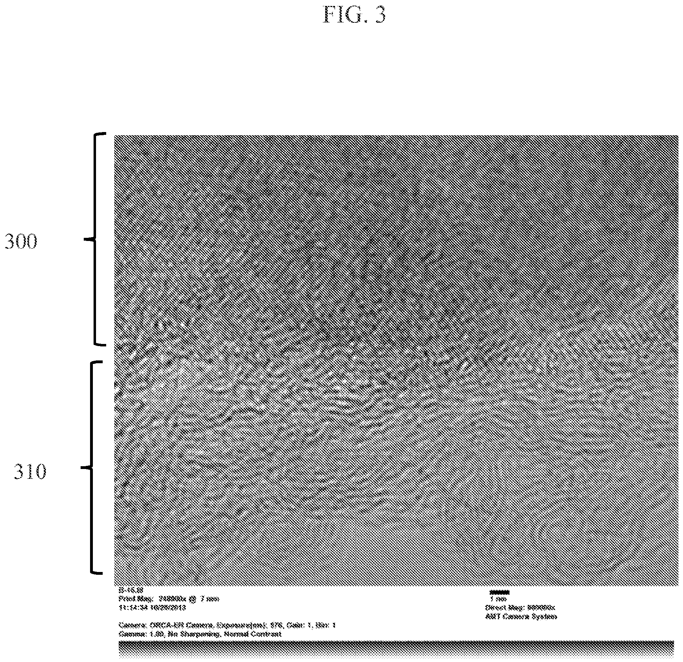

FIG. 3 is a high resolution TEM image of the interface between a silicon particle and a graphene nanoplatelet layer (scale bar is 1 nm) according to one or more embodiments. The upper region **300** is the lattice of the silicon particle. The lower region **310** is the graphene nanoplatelet coating on the silicon particle. The platelets in this image have graphene layers that are about 10-12 nm thick; the region closest to the silicon surface shows a strong connection to the silicon particle. The graphene layers are stacked over one another in a random manner to provide a tangled or crimped or undulating arrangement of layers.

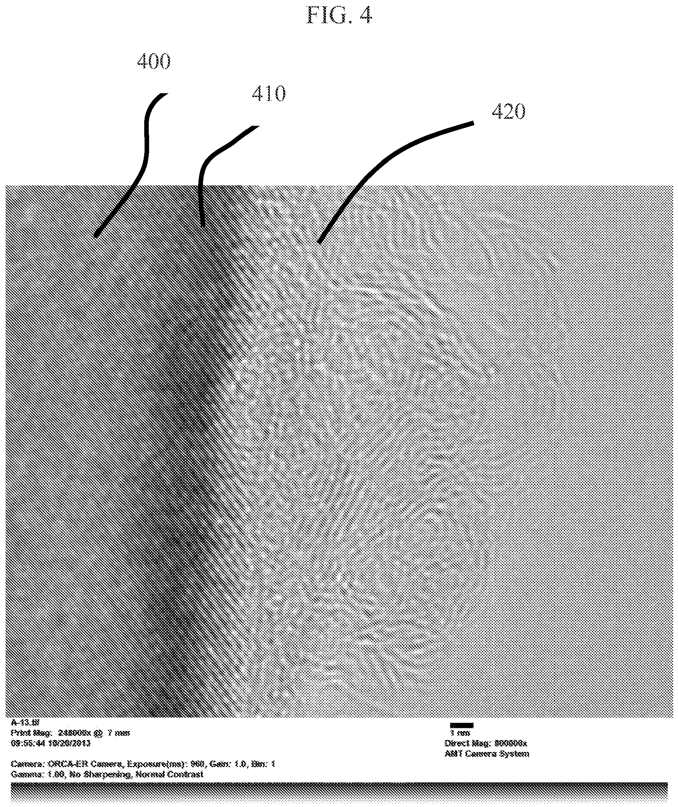

FIG. 4 is a high resolution TEM image of the interface between a silicon particle **400** and a graphene nanoplatelet layer (scale bar is 1 nm) according to one or more embodiments. The graphene nanoplatelet includes an inner region **410** that is intimately interacting with the silicon particle **400.** The region appears to provide an intermixing or interdiffusion of the silicon and graphene regions, as it transitions from an order structure (closest to silicon) to a disordered structure (further from silicon). The graphene nanoplatelet layer also includes an outer region **420** that includes a looser arrangement of graphene layers. The layers are not strictly planar to the silicon surface and take on a range of orientations, as the graphene layers form a tangled, undulating coating.

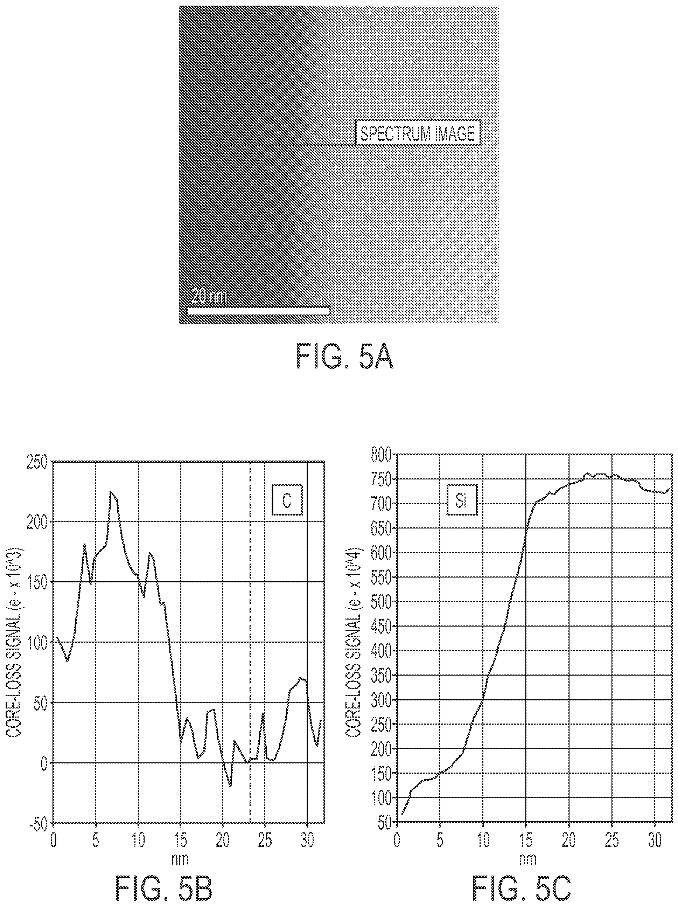

FIGs. 5A-5C investigate the composition of the interface region between the silicon particle and the graphene nanoplatelet coating according to one or more embodiments. Fig. 5A is a photomicrograph image of the surface being scanned by electron energy loss spectroscopy (EELS). in which the line indicates the area investigated. FIGs. 5B and 5C are intensity scans that show the intensity change of Si and C along the line of FIG. 5A. There is a layer with containing both Si and C.

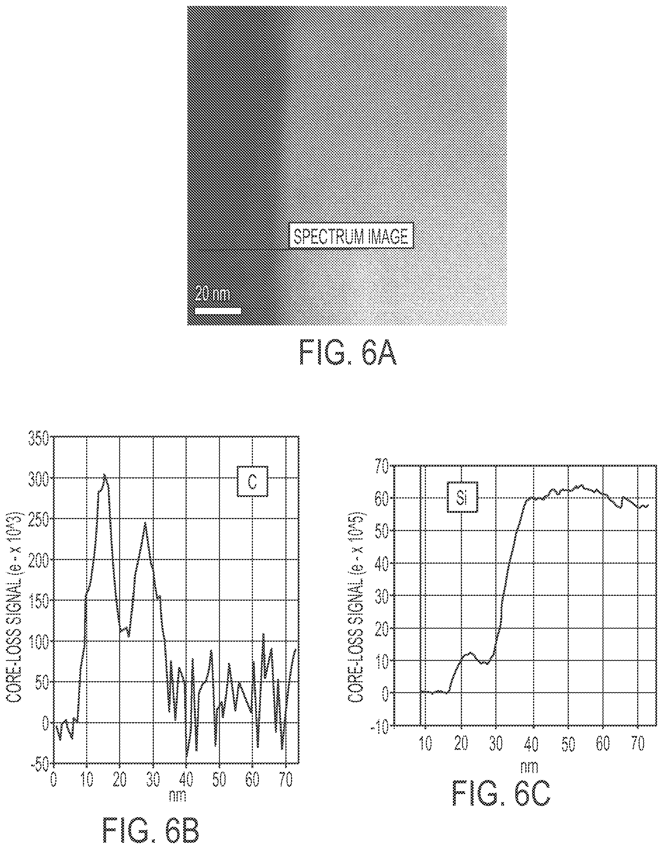

FIGs. 6A-6C investigate the composition of a different interface region between the silicon particle and the graphene nanoplatelet coating. Fig. 6A is a photomicrograph image of the surface being scanned by electron energy loss spectroscopy (EELS) in which the line indicates the area investigated. FIGs. 6B and 6C are intensity scans that show the intensity change of Si and C along the line of FIG. 6A. There is a layer with containing both Si and C.

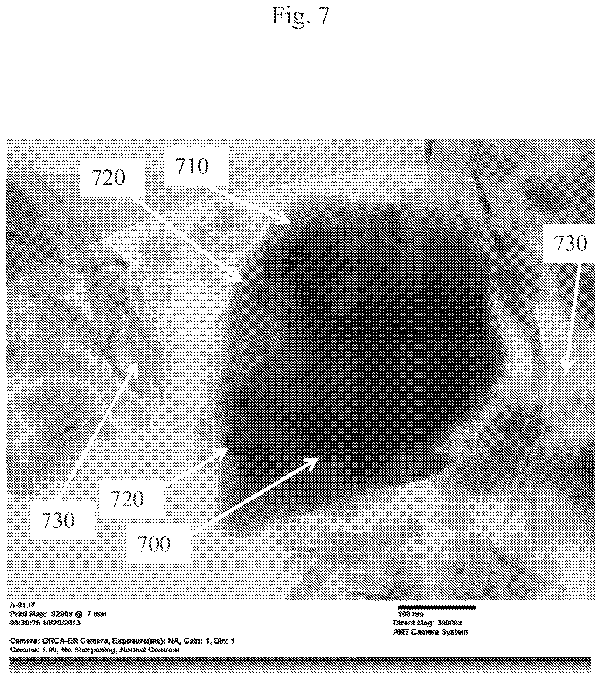

FIG. 7 is a TEM photomicrograph of graphitic nanocomposite according to one or more embodiments (scale bar is 100 nm). The silicon particle **700** has a graphene nanoplatelet layer **710** that is composes of smaller nanographene platelets **720.** Note that large graphene sheets **730** are also identifiable in the image; however, they are spaced apart from and do not constitute part of the silicon/graphene nanocomposite.

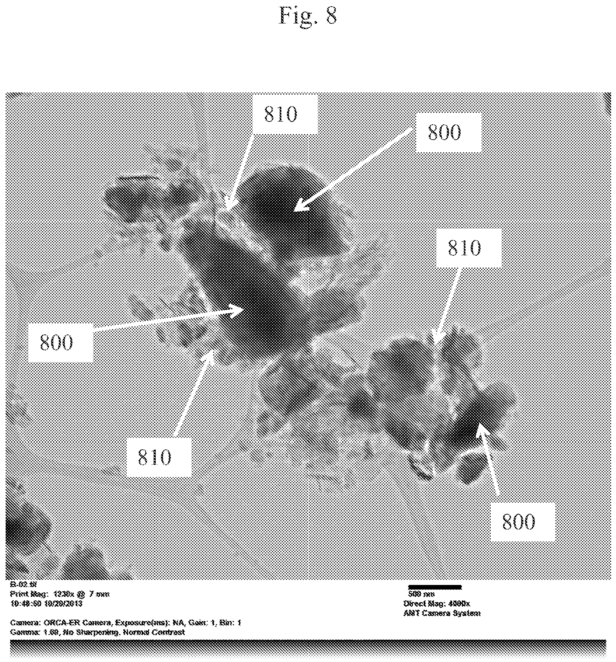

FIG. 8 is a slightly lower resolution TEM image of a cluster or agglomeration of a number of silicon particles **800** coated with a large number of graphene nanoplatelets **810** (scale bar is 500 nm). Even in this lower resolution image, the graphene nanoplatelet coating is clearly visible. It is apparent from this image that the silicon particle is many times larger than the nanoplatelets.

In another aspect, a method of making a graphitic nanocomposite suitable for use as a battery material is described. As noted above, composites using graphene sheets has been reported; however the resulting composites provide graphene sheets that span several or many active particles and do not give rise to the supporting and embracing network of nanographitic layer of the composites described herein. While it is possible to reduce the size of the large graphene sheets or platelets prior to compositing with the electroactive particles, the resultant nanoscale powder is difficult to handle and the dry powder mixing or even slurry mixing can be challenging due to agglomeration, material transport of low bulk, fluffy materials, increased risks of inhalation exposure, and the like. To avoid these prior art problems and to allow for the intimate contact between the electroactive particle and the graphene nanoplatelets, improved methods of making a graphitic nanocomposite include simultaneous size reduction and compositing of the component elements of the graphitic nanocomposite.

In one or more embodiments, a precursor graphite material and a precursor to the electroactive particles are introduced into an exfoliation apparatus that simultaneously (1) exfoliates the large graphite sheets into thinner grapheme layers, (2) reduces the graphite sheets to nanoscale dimensions, and (3) reduces the particle size of the electroactive particle precursor. Additives also can be included to the starting materials used to prepare the nanocomposite. Acetylene black, carbon black, or ultra-fine graphite particles may be used as an additional conductor additive. If the added particles are larger than or of a size commensurate with the graphitic nanoplatelets generated during this process, they are coated with the graphitic nanoplatelets. If the added particles are smaller than the silicon particles, they can become incorporated into the graphene nanoplatelet layer.

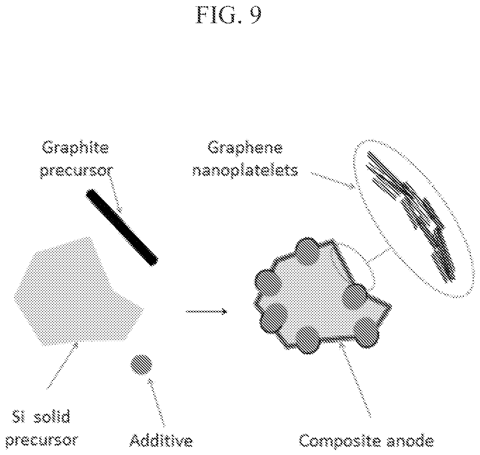

This process is illustrated in FIG. 9. The precursor materials include an electroactive particle such as silicon, graphite and optional additives. The graphite can be conventional or natural graphite. For example, graphite having a lateral dimension on the order of 5 µm to 800 µm can be used. The precursor electroactive particle can have a size of 100 microns or less. In some embodiments, particle sizes of 10 microns or less, or particle sizes of 5 microns or less can be used. In some embodiments, particle sizes of 3-10 microns, or particle sizes of 3-5 microns can be used.

The precursor materials are introduced into an exfoliation apparatus, wherein the graphite is exfoliated and size-reduced, and the electroactive particle is size-reduced. A suitable exfoliation apparatus is a media ball mill that imparts forces in three planes and in multiple orbital planes, simultaneously. The apparatus acts on the media to translate it in all planes simultaneously. By doing so, the energy of the apparatus is converted into the stress state required to cause the exfoliation of the particulate material. Other methods of milling, grinding, or size reduction of particulates can be used to the extent that they effect exfoliation instead of pulverization. A suitable apparatus and method of milling is described in co-pending United States Application No. 13/435,260, filed Mar. 30, 2012.

In one embodiment, the starting electroactive particle has a particle size of 3∼10 µm and the particles are reduced to particles with a longest lateral dimension is about 500 nm to about 3 µm or about 1-2 µm, with a tail into the smaller particle size. Because the electroactive particle size is reduced in a process that simultaneously forms the graphene nanoplatelets and assembles the graphene nanoplatelet layers around the electroactive particle, the particle size distribution of the electroactive particle can be large. In one or more embodiments, the size distribution of the electroactive particles can range from 10 nm to 3µm. In one or more embodiments, the size distribution of the silicon particles can range from 10 nm to 3µιη in an nSiG nanocomposite.

In one or more embodiments, 300∼500 µm natural graphite flake is used and nanographene having a thickness of between 0.34 nm and 50 nm, or a thickness of between .34 nm and 5 nm, and a lateral dimension of less than 900 nm is obtained. Graphene produced by media ball milling has very small particle size with a relatively high surface area. It is well-suited to make nano-composites or coatings by coating or admixing other particles. In addition, the high energy of the exfoliation process induces reaction between the graphene nanoparticles and the electroactive particle. While not limited to any specific mechanism or theory of operation, the graphene forms robust interactions such as covalent bonds or interdiffusion reactions with the electroactive material. In one or more embodiments, the interface may include intermetallic compounds formed by the reaction of the graphene with the electroactive particle. Metals or metal oxides can be coated or formed into composites with the high surface area, relatively low aspect ratio graphene. The expanded section in FIG.9 shows the nanoscale graphene platelets that coat the electroactive particle. Additives introduced during the milling operation, will also be incorporated into the coating, or they can occupy interstitial spaces between particles. Further details on a method of dry milling powders while effecting exfoliation of graphite is described in co-pending United States Application No. 13/474,860, filed May 18, 2012.

The method thereby provides significant improvements in both performance and properties of the final product and in the methods used to make it. The method produces a nanoscale composite starting with microscale precursor materials. Thus, the materials handling is easier and there are lower health risks associated with handling of the precursors materials and final powder products.

In one aspect, a method is provided for preparation of a nanocomposite including introducing an electroactive material powder into a high energy dry mill, wherein the powder particles are of a micron-scale dimension; introducing a graphite powder into the high energy dry mill, wherein the powder particles are of a micron-scale dimension; and milling the electroactive particle powder and the graphite particle powder, to exfoliate the graphite and reduce the particle size of the electroactive particle to between 10 nm and 3µm and reduce the particle size of the graphite particle to less than 900 nm, wherein the exfoliated size-reduced graphite coats the surface of the sized-reduced electroactive particle, wherein the final composite includes agglomerates of the graphene coated particles that are greater than 1 µm, or greater than 2 µm, or greater than 3 µm, while also possessing components that are on the nanoscale. Thus, the material performance benefits of the nanocomposite are realized while providing the ease of materials handling of micron-scale powders.

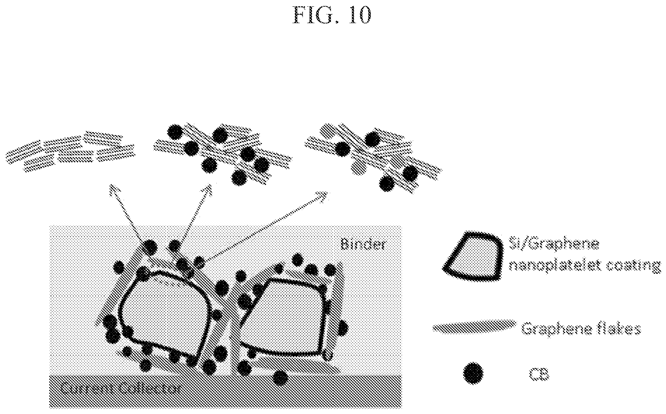

In another aspect, an anode prepared using the nanographitic composite is provided. Anode can be prepared by assembling the nanocomposite particles on a current collector and securing the particles, typically by using a binder, as illustrated in FIG. 10. The expanded view in FIG. 3 illustrates several exemplary embodiments of the nanocomposite that can be used in forming an anode. The graphitic nanoplatelet coating can consist substantially of graphitic nanoplatelets (left), or it can include carbon black (CB) as a conductive additive (center), or it can include both carbon black and/or acetylene black (right), by way of example. Suitable binders include those typically used in lithium ion batteries. Exemplary binders include polyacrylic acid(PAA), polyvinylidene fluoride (PVDF), carbomethoxy cellulose (CMC), PAA/CMC, CMC/SBR (styrene-butadiene rubber (SBR)), polyamide-imide (PAI), Sodium alginate, and lithium polyacrylate (LiPAA) could be used in a certain electrode formulation.

In addition to building graphitic nanoplatelets into the active composite anode, graphene flakes can also be included as a conductive additive in the electrode coating, as illustrated in FIG. 10. These graphene nanoplatelets are much larger than the nanoscale graphitic nanoplatelets used to from the graphitic nanoplatelet coating in the nanocomposite and can range from 5 to 50 µm, and more typically between 15 and 25 µm. The flexible and flake morphology of the graphene nanoplatelets is expected to provide better contact with the active particles and helps maintain the mechanical integrity of the electrode coating during the cycling. Moreover, if used together with carbon blacks and carbon nanotubes, graphene nanoplatelets additive may help create a conductive network with zero, one, and two-dimensional contacts throughout the electrode.

A further embodiment is a lithium ion battery incorporating such an anode, a cathode, a separator disposed between the anode and the cathode, and electrolyte in physical contact with both the anode and the cathode.

A lithium ion battery may include an anode featuring the nanographitic composite containing anode active particles. They can be readily mixed with graphene platelets or flakes to form graphene-enhanced particulates. Acetylene black, carbon black, or ultra-fine graphite particles may be used as an additional conductor additive. For the preparation of a cathode, the binder may be chosen from polytetrafluoroethylene (PTFE), polyvinylidene fluoride (PVDF), ethylene-propylene-diene copolymer (EPDM), or styrene-butadiene rubber (SBR), for example. Conductive materials such as electronically conductive polymers, meso-phase pitch, coal tar pitch, and petroleum pitch may also be used. Preferable mixing ratio of these ingredients may be 90 to 98% by weight for the particulates, and 2 to 10% by weight for the binder. There is no particularly significant restriction on the type of current collector, provided the material is a good electrical conductor and relatively corrosion resistant.

Although not required, a cathode can also include nanographitic composite containing cathode active particles. The cathode nanocomposite is made using the methods and procedures set up above for the anode. There is no particular restriction on the type and nature of the cathode active material, which can be selected for practicing the present invention. The cathode active substances can be prepared in the form of a fine powder, nano-wire, nano-rod, nano-fiber, or nano-tube. They can be readily mixed with NGPs to form graphene-enhanced particulates. Acetylene black, carbon black, or ultra-fine graphite particles may be used as an additional conductor additive. For the preparation of a cathode, the binder may be chosen from polytetrafluoroethylene (PTFE), polyvinylidene fluoride (PVDF), ethylene-propylene-diene copolymer (EPDM), or styrene-butadiene rubber (SBR), for example. Conductive materials such as electronically conductive polymers, meso-phase pitch, coal tar pitch, and petroleum pitch may also be used. Preferable mixing ratio of these ingredients may be 90 to 98% by weight for the particulates, and 2 to 10% by weight for the binder. There is no particularly significant restriction on the type of current collector, provided the material is a good electrical conductor and relatively corrosion resistant.

The separator may be selected from a synthetic resin nonwoven fabric, porous polyethylene film, porous polypropylene film, or porous PTFE film.

A wide range of electrolytes can be used for practicing the instant invention. Any known non-aqueous solvent which has been employed as a solvent for a lithium secondary battery can be employed. A non-aqueous solvent mainly consisting of a mixed solvent comprising ethylene carbonate (EC) and at least one kind of non-aqueous solvent whose melting point is lower than that of aforementioned ethylene carbonate and whose donor number is 18 or less (hereinafter referred to as a second solvent) may be preferably employed. This non-aqueous solvent is advantageous in that it is (a) stable against a negative electrode containing a carbonaceous material well developed in graphite structure; (b) effective in suppressing the reductive or oxidative decomposition of electrolyte; and (c) high in conductivity. Examples of preferred mixed solvent are a composition comprising EC and EMC; comprising EC, PC and EMC; comprising EC, EMC and DEC; comprising EC, EMC and DMC; and comprising EC, EMC, PC and DEC; with the volume ratio of EMC being controlled within the range of 30 to 80%. The electrolytic salts to be incorporated into a non-aqueous electrolyte may be selected from a lithium salt such as lithium perchlorate (LiClO₄), lithium hexafluorophosphate (LiPF₆), lithium borofluoride (LiBF₄), lithium hexafluoroarsenide (LiAsF₆), lithium trifluoro-metasulfonate (LiCF₃SO₃) and bis-trifluoromethyl sulfonylimide lithium [LiN(CF₃SO₂)₂].

The proposed Si/graphene composite anode is a potentially disruptive and enabling technology. Paired with a high energy cathode, it will help increase energy density of lithium ion battery from the present level of <200 Wh/kg to the 400 Wh/kg that is needed for electrified transportation in US and the world. High energy-density lithium ion batteries are also needed for other industries such as consumer electronics, utility, power electronics, and renewable energy.

FIG. 4 shows the typical capacity, first cycle reversibility, and cycling stability of Si/graphene anode tested in coin cells vs. Li counter-electrode in 1M LiPF₆ and EC: DMC (1:1) electrolyte with 10% FEC as an additive. The material shows a reversible capacity over 1000 mAh/g, a first cycle reversibility of >80%, and a stable cycling over more than 140 cycles, which is typically the meaningful testing range of a lab coin cell. FIG. 5 shows the cycling performance of Si/graphene in full cells paired with lithium nickel cobalt aluminum oxide (NCA) cathode obtained from a battery developer. The anode had a loading of 5.1 mAh/cm² and was cycled at a capacity around 600 mAh/g. While it showed a substantial capacity drop in the first 200 cycles, it reached 1000 cycles with 50% of capacity retention. Further optimization of parameters such as cell balance, loading, formation scheme, and charge/discharge scheme will result in improved performance.

The performance of cells prepared using the graphitic nanocomposites according to one or more embodiments were compared to cells using a mixture of silicon and micron size graphene nanoplatelet (GNP).

Electrodes were made of 70% SiG nanocomposite as an active material with 20% of polyacrylic acid (MW=450K) binder, and 10% of micron size graphene nanoplatelet (GNP) as a conductive agent. An SiG nanocomposite containing 67 wt% Si was fabricated by milling with natural graphite for 3 hours. Its tap density was 0.93 and BET surface area was 163 m²/g. The electrode composition was prepared by first dissolving polyacrylic acid in propylene glycol monomethyl ether (PGME), followed by GNP dispersion via simple magnetic stirring at 400 rpm for at least 2 hours. Then SiG powder was added and stirred at 500 rpm for at least 3 hours. The slurry was coated on Cu foil by an automatic doctor blade casting. The coated electrode was dried at room temperature, followed by final drying at 120 °C overnight. An active mass loading of Si was about 1.2-1.5 mg/cm². Capacity of the electrode was adjusted to about 2414 mAh/g.

For the Si/G blended anodes, Si mass loading on electrode was kept the same as SiG anode. However, the silicon powder was simply blended by adding Si and with the micron size graphene nanoplatelets (GNP) in order after dissolving a binder in a solvent. In all cases, SiG (or Si+G) : PAA Binder : Conductive agent = 70:20:10. Even when nano Si is used, similar result obtained.

Half-cell tests were conducted using 2025 coin cell in an argon-filled glove box with Li metal discs as a counter electrode. A porous glass paper used as a separator was soaked in 1M LiPF₆-EC/DMC electrolyte with 10 wt% fluoroethylene carbonate. Electrochemical experiments were performed at 26 °C by galvanostatic charge/discharge cycling of the cells in the range of 0.01 to 1 V vs. Li + /Li, monitored by Arbin battery tester. The cell prepared using the SiG nanocomposite according to one or more embodiments of the invention maintained a capacity of approx. 1500 mAh/g over 200 cycles. In comparison, the capacity of the Si+G blends faded quickly to approx.. 500-800 mAh/g after just 100 cycles.

It will be appreciated that while a particular sequence of steps has been shown and described for purposes of explanation, the sequence may be varied in certain respects, or the steps may be combined, while still obtaining the desired configuration. Additionally, modifications to the disclosed embodiment and the invention as claimed are possible and within the scope of this disclosed invention. If any described embodiments fall outside the scope of the claims they may considered to be illustrative examples.

## Claims

1. A nanographitic composite for use as an anode in a lithium ion battery, comprising: a plurality of composite particles comprising, each composite particle comprising:
a particle core comprising an electroactive material;
a coating layer comprising an inner layer of graphene nanoplatelets that is bound by covalent or interdiffusion bonding to the electroactive particle and an outer layer of graphene nanoplatelets disposed over the inner layer of graphene that interact loosely with the inner layer of graphene nanoplatelets, wherein graphene nanoplatelets in the outer layer comprise graphene nanoplatelets having a longest lateral dimension that is less than a longest lateral dimension in the electroactive particle.

2. The nanographitic composite of claim 1, wherein electroactive particle comprises silicon and/or the silicon is present in a range from 10 wt% to 90 wt% of the composite.

3. The nanographitic composite of claim 1 or 2, wherein the inner layer comprises a mixture of carbon and silicon, and/or wherein the electroactive particle comprises silicon and the inner layer comprises an SiC intermetallic.

4. The nanographitic composite of claim 1, wherein the inner layer has a thickness in the range of 5-25 nm.

5. The nanographitic composite of claim 1, wherein the inner layer is integral with the electroactive particle and/or the inner layer is covalently bonded to the electroactive particle and optionally wherein the covalent bond is a pi-bond or a partial pi-bond.

6. The nanographitic composite of claim 1, wherein electroactive particle comprises silicon and the silicon and carbon content of the inner layer varies across its thickness.

7. The nanographitic composite of claim 1, wherein the graphene nanoplatelets have a thickness of 0.34 nm to 50 nm and lateral dimensions of less than 900 nm, and optionally wherein the outer layer of graphene nanoplatelets comprises multiple layers of graphene nanoplatelets.

8. The nanographitic composite of claim 1, wherein the composite further comprises a conductive carbon additive, and optionally, the conductive carbon additive is selected from the group consisting of carbon black, acetylene black, carbon nanotube, carbon fiber, carbon nanohorn, carbon nanocoil and combinations thereof.

9. The nanographitic composite of claim 1, wherein the composite has a tap density in the range of greater than 0.50 g/cm³ to 0.93 g/cm³.

10. The nanographitic composite of claim 1, wherein graphene nanoplatelets in the outer layer comprise graphene nanoplatelets having a longest lateral dimension that is less than 50% of a longest lateral dimension the electroactive particle, or less than 25% of a longest lateral dimension the electroactive particle, or a longest lateral dimension of less than 500 nm, or the graphene nanoplatelets have a longest lateral dimension in the range of 10 nm-700 nm, or the graphene nanoplatelets have a longest lateral dimension in the range of 30 nm to 200 nm.

11. An electrode for use as an anode in a lithium ion battery, said electrode comprising:
(a) the nanographitic composite according to claim any one of claims 1-10; and
(b) a binder.

12. The electrode of claim 11, wherein the electrode comprises a conductive additive and the conductive additive is 2 to 20 wt% of the total electrode weight.

13. A lithium ion battery comprising:
an anode according to claim 11 or 12;
a cathode;
a separator spacing apart the anode and the cathode; and
an electrolyte in contact with the anode and the cathode.

14. A method of making a nanocomposite suitable for use in a lithium ion battery, comprising:
introducing silicon particle powder into a high energy exfoliation dry mill, wherein the particles are of a micron-scale dimension;
introducing a graphite particle powder into the high energy exfoliation dry mill, wherein the particles are of a micron-scale dimension, wherein the silicon is in the range of 40 wt to 70 wt% of the particles; and
milling the electroactive particle powder and the graphite particle powder, to exfoliate the graphite and reduce the particle size of the electroactive particle to less than 3um and reduce the particle size of the graphite particle to less than 900 nm;
wherein the exfoliated size-reduced graphite has a longest lateral dimension that is less than the longest lateral dimension of the silicon particle and coats the surface of the sized-reduced silicon particle.

15. The method of claim 14, wherein the resultant nanocomposite has a bulk density of greater than 0.50 g/cm³.

16. The electrode of claim 11, wherein the binder is 3 to 20 wt% of the total electrode weight.

## Patentansprüche

1. Nanographitischer Verbundstoff zur Verwendung als Anode in einer Lithiumionenbatterie, umfassend: eine Vielzahl von Verbundstoffteilchen, wobei jedes Verbundstoffteilchen folgendes umfasst:
einen Teilchenkern, der elektroaktives Material umfasst;
eine Beschichtungsschicht umfassend eine Innenschicht aus Graphen-Nanoplättchen, die durch eine kovalente Bindung oder Interdiffusionsverbindung an das elektroaktive Teilchen gebunden ist, und eine Außenschicht aus Graphen-Nanoplättchen, die über der Graphen-Innenschicht angeordnet ist, die lose mit der Innenschicht aus Graphen-Nanoplättchen interagiert, wobei die Graphen-Nanoplättchen in der Außenschicht Graphen-Nanoplättchen umfassen, die eine längste Querabmessung haben, die geringer ist als eine längste Querabmessung im elektroaktiven Teilchen.

2. Nanographitischer Verbundstoff nach Anspruch 1, wobei das elektroaktive Teilchen Silizium umfasst und/oder das Silizium in einem Bereich von 10 Gewichtsprozent bis 90 Gewichtsprozent des Verbundstoffes vorhanden ist.

3. Nanographitischer Verbundstoff nach Anspruch 1 oder 2, wobei die Innenschicht eine Mischung aus Kohlenstoff und Silizium umfasst und/oder das elektroaktive Teilchen Silizium umfasst und die Innenschicht intermetallisches SiC umfasst.

4. Nanographitischer Verbundstoff nach Anspruch 1, wobei die Innenschicht eine Dicke im Bereich von 5 bis 25 nm aufweist.

5. Nanographitischer Verbundstoff nach Anspruch 1, wobei die Innenschicht fest in das elektroaktive Teilchen integriert ist und/oder die Innenschicht kovalent an das elektroaktive Teilchen gebunden ist und wobei optional die kovalente Bindung eine pi-Bindung oder eine teilweise pi-Bindung ist.

6. Nanographitischer Verbundstoff nach Anspruch 1, wobei das elektroaktive Teilchen Silizium umfasst und der Silizium- und Kohlenstoffgehalt der Innenschicht innerhalb dessen Dicke variiert.

7. Nanographitischer Verbundstoff nach Anspruch 1, wobei die Graphen-Nanoplättchen eine Dicke von 0,34 nm bis 50 nm und eine Querabmessung von weniger als 900 nm haben und wobei optional die Außenschicht aus Graphen-Nanoplättchen mehrere Schichten aus Graphen-Nanoplättchen umfasst.

8. Nanographitischer Verbundstoff nach Anspruch 1, wobei der Verbundstoff ferner ein leitfähiges Kohlenstoffadditiv umfasst und optional das leitfähige Kohlenstoffadditiv ausgewählt ist aus der Gruppe umfassend Ruß, Azetylenruß, Kohlenstoff-Nanoröhre, Kohlenstofffaser, Kohlenstoff-Nanohorn, Kohlenstoff-Nanospirale und Kombinationen davon.

9. Nanographitischer Verbundstoff nach Anspruch 1, wobei der Verbundstoff eine Klopfdichte im Bereich von größer als 0,50 g/cm³ bis 0,93 g/cm³ hat.

10. Nanographitischer Verbundstoff nach Anspruch 1, wobei die Graphen-Nanoplättchen in der Außenschicht Graphen-Nanoplättchen umfassen, die eine längste Querabmessung haben, die weniger als 50 % der längsten Querabmessung des elektroaktiven Teilchens beträgt, oder weniger als 25 % der längsten Querabmessung des elektroaktiven Teilchens beträgt, oder eine längste Querabmessung von weniger als 500 nm haben, oder die Graphen-Nanoplättchen eine längste Querabmessung im Bereich von 10 nm - 700 nm haben, oder die Graphen-Nanoplättchen eine längste Querabmessung im Bereich von 30 nm bis 200 nm haben.

11. Elektrode zur Verwendung als Anode in einer Lithiumionenbatterie, wobei die Elektrode folgendes umfasst:
(a) den nanographitischen Verbundstoff nach einem der Ansprüche 1-10; und
(b) ein Bindemittel.

12. Elektrode nach Anspruch 11, wobei die Elektrode ein leitfähiges Additiv umfasst und wobei das leitfähige Additiv 2 bis 20 Gewichtsprozent des gesamten Elektrodengewichts beträgt.

13. Lithiumionenbatterie, die Folgendes umfasst:
eine Anode nach Anspruch 11 oder 12;
eine Kathode;
eine Trennvorrichtung, die Anode und Kathode voneinander beabstandet; und
ein Elektrolyt, das in Kontakt mit der Anode und der Kathode ist.

14. Verfahren, um einen Nanoverbundstoff für die Verwendung in einer Lithiumionenbatterie geeignet zu machen, umfassend:
Einbringen von Siliziumteilchenpulver in eine Hochenergie-Exfoliationstrockenmühle, wobei die Teilchen eine mikrometerskalige Abmessung haben;
Einbringen eines Graphitteilchenpulvers in eine Hochenergie-Exfoliationstrockenmühle, wobei die Teilchen eine mikrometerskalige Abmessung haben, wobei sich das Silizium im Bereich von 40 Gewichtsprozent bis 70 Gewichtsprozent der Teilchen befindet;
und Mahlen des elektroaktiven Teilchenpulvers und des Graphitteilchenpulvers, um das Graphit abzuschälen und die Teilchengröße des elektroaktiven Teilchens auf weniger als 3 um zu reduzieren und die Teilchengröße des Graphitteilchens auf weniger als 900 nm zu reduzieren;
wobei das abgeschälte, in der Größe reduzierte Graphit eine längste Querabmessung hat, die geringer ist als die längste Querabmessung des Siliziumteilchens und die Oberfläche des in der Größe reduzierten Siliziumteilchens beschichtet.

15. Verfahren nach Anspruch 14, wobei der daraus resultierende Nanoverbundstoff eine Massendichte von mehr als 0,50 g/cm³ aufweist.

16. Elektrode nach Anspruch 11, wobei das Bindemittel 3 bis 20 Gewichtsprozent des gesamten Elektrodengewichts beträgt.

## Revendications

1. Composite nanographite destiné à être utilisé comme une anode dans une batterie lithium-ion, comprenant : une pluralité de particules de composite comprenant, chaque particule de composite comprenant :
un noyau de particule comprenant un matériau électro-actif ;
une couche de revêtement comprenant une couche interne de nanoplaquettes de graphène qui est liée par covalence ou par liaison par interdiffusion à la particule électro-active et une couche externe de nanoplaquettes de graphène disposées par-dessus la couche interne de graphène qui interagissent de manière lâche avec la couche interne de nanoplaquettes de graphène, dans lequel les nanoplaquettes de graphène dans la couche externe comprennent des nanoplaquettes de graphène ayant une dimension latérale la plus longue qui est inférieure à une dimension latérale la plus longue dans la particule électro-active.

2. Composite nanographite selon la revendication 1, dans lequel la particule électro-active comprend du silicium et/ou le silicium est présent dans une plage de 10 % en poids à 90 % en poids du composite.

3. Composite nanographite selon la revendication 1 ou 2, dans lequel la couche interne comprend un mélange de carbone et de silicium, et/ou dans lequel la particule électro-active comprend du silicium et la couche interne comprend un SiC intermétallique.

4. Composite nanographite selon la revendication 1, dans lequel la couche interne a une épaisseur dans la plage de 5 à 25 nm.

5. Composite nanographite selon la revendication 1, dans lequel la couche interne fait partie intégrante avec la particule électro-active et/ou la couche interne est liée par covalence à la particule électro-active et facultativement dans lequel la liaison covalente est une liaison pi ou une liaison pi partielle.

6. Composite nanographite selon la revendication 1, dans lequel la particule électro-active comprend du silicium et la teneur en silicium et en carbone de la couche interne varie sur son épaisseur.

7. Composite nanographite selon la revendication 1, dans lequel les nanoplaquettes de graphène ont une épaisseur de 0,34 nm à 50 nm et des dimensions latérales de moins de 900 nm, et facultativement dans lequel la couche externe des nanoplaquettes de graphène comprend des couches multiples de nanoplaquettes de graphène.

8. Composite nanographite selon la revendication 1, dans lequel le composite comprend en outre un additif de carbone conducteur, et facultativement, l'additif de carbone conducteur est sélectionné dans le groupe constitué par le noir de carbone, le noir d'acétylène, un nanotube de carbone, une fibre de carbone, un nanocornet de carbone, une nanobobine de carbone et des combinaisons de ceux-ci.

9. Composite nanographite selon la revendication 1, dans lequel le composite a une masse volumique après tapement de plus de 0,50 g/cm³ à 0,93 g/cm³.

10. Composite nanographite selon la revendication 1, dans lequel les nanoplaquettes de graphène dans la couche externe comprennent des nanoplaquettes de graphène ayant une dimension latérale la plus longue qui est inférieure à 50 % de la dimension latérale la plus longue dans la particule électro-active, ou inférieure à 25 % de la dimension latérale la plus longue dans la particule électro-active, ou une dimension latérale la plus longue inférieure à 500 nm, ou les nanoplaquettes de graphène ont une dimension latérale la plus longue dans la plage de 10 nm à 700 nm, ou les nanoplaquettes de graphène ont une dimension latérale la plus longue dans la plage de 30 nm to 200 nm.

11. Électrode destinée à être utilisée comme une anode dans une batterie lithium-ion, ladite électrode comprenant :
(a) le composite nanographite selon l'une quelconque des revendications 1 à 10 ; et
(b) un liant.

12. Électrode selon la revendication 11, dans laquelle l'électrode comprend un additif conducteur et l'additif conducteur représente 2 à 20 % en poids du poids total de l'électrode.

13. Batterie lithium-ion comprenant :
une anode selon la revendication 11 ou 12 ;
une cathode ;
un séparateur espaçant l'anode et la cathode l'une de l'autre ; et
un électrolyte en contact avec l'anode et la cathode.

14. Procédé de fabrication d'un nanocomposite conçu pour l'utilisation dans une batterie lithium-ion, comprenant :
l'introduction de poudre de particules de silicium dans un broyeur à sec exfoliant à haute énergie, dans lequel les particules sont d'une dimension à l'échelle du micron ;
l'introduction d'une poudre de particules de graphite dans le broyeur à sec exfoliant à haute énergie, dans lequel les particules sont d'une dimension à l'échelle du micron, dans lequel le silicium est dans la plage de 40 % en poids à 70 % en poids des particules ;
et le broyage de la poudre de particules électro-actives et de la poudre de particules de graphite, pour exfolier le graphite et réduire la granulométrie de la particule électro-active à moins de 3 um et réduire la granulométrie de la particule de graphite à moins de 900 nm ;
dans lequel le graphite exfolié de taille réduite a une dimension latérale la plus longue qui est inférieure à la dimension latérale la plus longue de la particule de silicium et revêt la surface de la particule de silicium de taille réduite.

15. Procédé selon la revendication 14, dans lequel le nanocomposite qui en résulte a une masse volumique apparente de plus de 0,50 g/cm³.

16. Électrode selon la revendication 11, dans laquelle le liant représente 3 à 20 % en poids du poids total de l'électrode.
